# EUROPEAN PATENT APPLICATION

(11) **EP 1 020 558 A1**
(43) Date of publication of application: **19.07.2000**
(21) Application number: 99124039.1
(22) Date of filing: 09.12.1999
(51) Int. Cl.: D06P 1/52, C11D 3/37, C11D 3/33, C11D 3/36

(54) **Detergency-improving composition**

(30) Priority: 09.12.1998 JP 34970598
(71) Applicant: Kao Corporation, Chuo-Ku Tokyo 103 (JP)
(72) Inventor: Yoshikawa, Kiyoaki, Wakayama-shi, Wakayama (JP); Kishimoto, Koji, Wakayama-shi, Wakayama (JP)
(74) Representative: HOFFMANN - EITLE

(57) **Abstract**

The present invention provides a detergency-improving agent being capable of preventing scum accumulation formed in a refinery-treating machine when refinery-treatment is carried out at a high alkali concentration. That is, the present invention provides a detergency-improving agent comprising copolymer obtained by one specific monomer such as an alkylene oxide adduct of an allyl alcohol and the other specific monomer such as maleic acid and acrylic acid and comprising a specific aminocarboxylic acid or organic phosphonic acid, at a specific weight ratio of the copolymer to the specific.

## Description

### Technical Field

The present invention relates to a detergency-improving composition for use at the refinery process of fiber products and the like.

### Background Art

Because of the presence of contaminants in natural fibers, for example resin and wax components and the like in plant fiber and fat and colloidal substances in animal fiber, the presence of contaminants such as a large amount of mineral oil and paraffin wax in synthetic fiber and chemical fiber such as polyester and nylon, which have been added at the spinning stage of these fibers, and the presence of contaminants such as sizing agents including for example acrylate esters, polyvinyl alcohol and starch and the like in woven fabrics comprising the aforementioned fibers, refinery-treating is practiced so as to remove these contaminants. Depending on the mode of feeding fiber products into refinery-treating machines, the refinery-treating method are broadly grouped as batch-wise process and continuous process. The refinery-treating machine used in batch mode mainly comprises a treatment-tank, while the refinery-treating machine used in continuous mode mainly comprises a treatment-tank called as saturator, a squeeze roller and a steamer box equipped with a multi-step roll. For example, the continuous refinery-treating comprises filling a saturator with an aqueous alkali solution comprising a refinery agent and a chelating agent (referred to as "treatment-solution" hereinafter), immersing a fiber product therein, and passing then the resulting fiber product through a squeeze roller and subsequently through a steamer box to remove contaminants therein together with the treatment-solution.

At such refinery process, however, the contaminants or impurities, which is dissociated by an alkaline agents such as NaOH and a surfactant, form salts being insoluble in water, along with metal ions derived from the hardness components and fiber materials in the treatment-solution, so that the salts accumulate as scum in the refinery-treating machine. At the continuous refinery-treatment, for example, the scum readily accumulates in the saturator and the roll of the steamer box. Because the accumulating scum damages the fiber product, the scum should necessarily be removed laboriously. The water-insoluble salts generated in a treating bath re-adheres on the resulting fiber product, so water-absorptivity and feeling of touch of the fiber product are damaged while the dyeability thereof is suppressed. So as to prevent the generation of salts being insoluble in water, generally, chelating agents are effectively added. Even if some chelating agents are added, however, the chelating agent cannot sufficiently exert such effect at the refinery process using alkaline agents. As the reason thereof; in the presence of alkaline agents, the chelating potency of a chelating agent is deteriorated; the chelating agent per se is modified insoluble in the presence of excess hardness components, so that the effect thereof is deteriorated; or scale formation occurs due to the hydrolysis of the chelating agent per se.

So as to overcome these problems, the treatment by means of detergency-improving agents, along with refinery agents or at a preliminary treatment before a refinery process, has been proposed. JP-A 61-275466 discloses a detergency-improving agent comprising a copolymer formed from a mono (metha)allyl ether-based monomer and a maleic acid-based monomer; JP-A 64-109 and JP-A 2-138319 disclose a detergency-improving agent comprising a copolymer of an allyl ether-maleic anhydride; and JP-A 3-21699 discloses a detergency-improving agent comprising containing a poly-α-hydroxyacrylate polymer and a specific aminocarboxylic acid or a specific organic phosphonic acid.

However, as a higher alkaline concentration (for example, at 20 g/L or more of NaOH), even these detergency-improving agents could more ineffectively prevent accumulation of scum.

### Disclosure of the Invention

It is the aim of the invention to provide a detergency-improving composition with a greater efficiency on the prevention of scum accumulation on a refinery-treating machine even under a condition of a high alkali concentration. Further, it is an additional aim of the invention to provide a detergency-improving composition which can uniformly disperse a dye at a high salt concentration and which makes good dye-performance exert uniformly, even if large amount of sodium sulfate, sodium carbonate and the like on is used at a dyeing process.

In accordance with the invention, a detergency-improving composition can be provided with no occurrence of scum accumulation even at a refinery process at a high alkali concentration. In accordance with the invention, furthermore, a detergency-improving composition can be obtained, which can uniformly disperse a dye at a high salt concentration and which makes good dye-performance exert uniformly, even if large amount of sodium sulfate, sodium carbonate and the like is used at a dyeing process.

The present invention provides a detergency-improving composition comprising copolymer (A) prepared by polymerizing the following monomers (1) and (2) or the following monomers (1), (2) and (3) and at least one compound (B) selected from the compounds represented by the following general formulae (4), (5) and (6), at an A/B ratio of 99/1 to 40/60 by weight.
- Monomer (1): represented by the following formula (1); 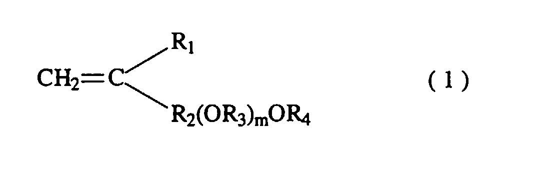
wherein
- R₁:: hydrogen atom or methyl group;
- R₂:: -(CH₂)-, -(CH₂)₂- or -C(CH₃)₂-;
- R₃:: an alkylene group having 2 to 4 carbon atoms;
- R₄:: hydrogen atom or an alkyl group having 1 to 4 carbon atoms; and
- m:: a number selected from 1 to 100.

- Monomer (2): represented by the following formula (2). 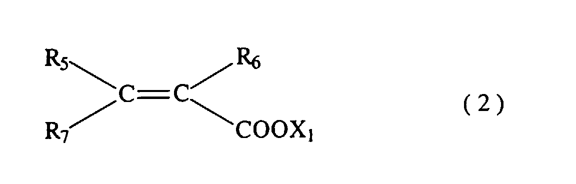
wherein
- R₅, R₆:: hydrogen atom or methyl group;
- R₇:: hydrogen atom, methyl group or -COOX₂; and
- X₁, X₂:: representing independent from the others, hydrogen atom, a monovalent metal atom, a divalent metal atom, ammonium group or an organic amine group.

- Monomer (3): having an unsaturated bond which is copolymerizable with the monomers (1) and (2). 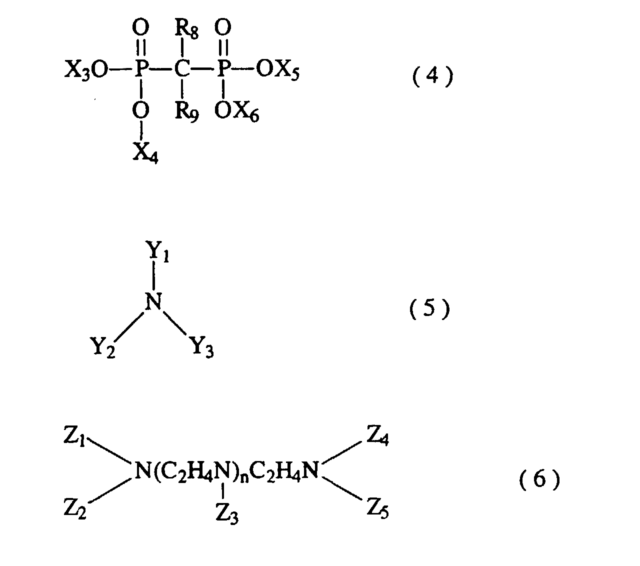
wherein
- R₈:: hydrogen atom or an alkyl group having 1 to 10 carbon atoms;
- R₉:: hydrogen atom, hydroxy group, an alkyl group having 1 to 4 carbon atoms, a C 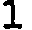 ₋ 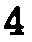 alkyl group having a hydroxy group, or -N(R₁₀) (R₁₁) wherein R₁₀ and R₁₁ independently represent hydrogen atom, an alkyl group having 1 to 22 carbon atoms, a cycloalkyl group having 5 to 6 carbon atoms, a phenyl group, an alkylphenyl group having a C 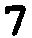 ₋ 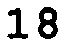 alkyl group, a phenylalkyl group having 7 to 18 carbon atoms or an alkanol group having 1 to 10 carbon atoms;
- X₃, X₄, X₅, X₆:: representing independent from the others, a hydrogen atom, a monovalent metal atom, a divalent metal atom, ammonium group or an organic amine group;
- Y₁, Y₂, Y₃:: representing independent from the others, a hydrogen atom, -CH₂COOX₇ group or a group represented by the following chemical formula: 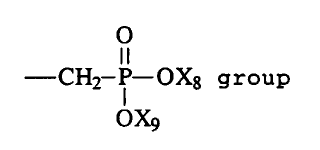
- Z₁, Z₂, Z₃, Z₄, Z₅:: representing independent form the others, a hydrogen atom, -CH₂COOX₁₀ group or a group represented by the following formula: 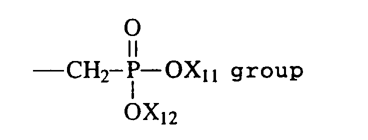
- X₇, X₈, X₉, X₁₀, X₁₁, X₁₂;: representing independent form the others, a hydrogen atom, a monovalent metal atom, a divalent metal atom, ammonium group or an organic amine group; and
- n:: an integer of 0 to 4.

Further, in the present invention, Compound (B) is preferable to be a compound represented by the above-mentioned formula (4)

The present invention also provides a method and use for improving detergency, of which comprises the added detergency-improving composition defined above at fiber-refinery.

The present invention further provides a method and use for improving dyeability, of which comprises the added detergency-improving composition defined above in fiber-refinery.

In the present invention, a method and use for improving detergency is provided, of which comprises the added detergency-improving composition defined above at deterging of object in the presence of a high concentration of an alkali.

Incidentally, the present invention provides a method and use for preventing accumulation of scum on a refinery-treating machine, of which comprises the used detergency-improving composition defined above at carrying out fiber-refinery.

Further, the present invention provides a method and use for uniformly dispersing a dye, of which comprises the used detergency-improving composition defined above, too.

### Modes for Carrying out the Invention

The present inventors have found that, when Components (A) and (B) are used in combination thereof, they can provide a very high efficiency on the prevention of scum accumulation even at a high alkali concentration.

Component (A) of the present invention is a copolymer of the above-mentioned monomers (1) and (2) or the above-mentioned monomers (1), (2) and (3).

The monomer (1) includes an alkylene oxide (referred to as AO hereinafter) adduct of an allyl alcohol and a monoalkyl ether thereof, an AO adduct of a methallyl alcohol and a monoalkyl ether thereof and may include a combination of two or more thereof. AO includes ethylene oxide (referred to as EO hereinafter), propylene oxide (referred to as PO hereinafter) and butylene oxide. As the monomer (1), the AO adduct of an allyl alcohol and a monoalkyl ether thereof are preferable and the AO adduct of an allyl alcohol is particularly preferable. From the respect of the efficiency on the prevention of scum accumulation, m as the average number of AO moles added is 1 to 100, preferably 1 to 70 and particularly preferably 3 to 50.

The monomer (2) includes maleic acid, acrylic acid, methacrylic acid, crotonic acid and salts thereof and may include a combination of two or more thereof. Maleic acid and acrylic acid are particularly preferable.

The monomer (3) has an unsaturated bond being copolymerizable with the above-mentioned monomers (1) and (2) but excludes the monomers (1) and (2). As the monomer (3), itaconic acid, styrene, methylstyrene, vinyl chloride, vinylidene chloride, isobutylene, diisobutylene, vinyl acetate, acrylonitrile, acrylamide and the like are cited. Styrene is preferable.

In the present invention, Component (A) includes a copolymer of a mono(metha)allyl ether-based monomer and a maleic acid-based monomer as described at page 3 line 6 of upper left column to page 5 line 14 of upper left column in JP-A 61-275466,; an allyl ether-maleic anhydride copolymer described at page 2 line 3 of upper left column to page 3 line 11 of upper left column in JP-A 64-109; and the like.

So as to obtain high dispersibility by Component (A), it is desirable that the monomer (1) is copolymerized at a ratio of 5 to 80 mol %, preferably 5 to 50 mol %, particularly preferably 10 to 40 mol %; the monomer (2) is copolymerized at a ratio of 5 to 95 mol %, preferably 20 to 90 mol %, particularly preferably 40 to 90 mol %; and the monomer (3) is copolymerized at a ratio of 0 to 50 mol %, preferably 0 to 30 mol %, particularly preferably 0 to 20 mol %. Furthermore, the molar ratio of the monomer (1)/the monomer (2) is preferably 5/95 to 95/5, more preferably 10/90 to 60/40, particularly preferably 10/90 to 40/60. Component (A) can be obtained by copolymerizing together the monomers (1) and (2) or the monomers (1), (2) and (3) by a publicly known polymerization process such as bulk polymerization and solution polymerization in the presence of a polymerization initiator such as t-butyl hydro peroxide and hydroperoxide. Additionally, when dicarboxylic acid is used as the monomer (2) for the polymerization, the neutralization degree is preferably 30 to 60%, from the respect that the polymerization rate might be secured.

The weight average molecular weight of the component (A) is preferably 500 to 100, 000, more preferably 1,000 to 50,000.

Component (B) of the present invention is one or more compounds selected from the compounds represented by the above-mentioned formulae (4), (5) and (6). Component (B) exerts high chelating potency.

The organic phosphonic acid of the above-mentioned formula (4) includes methylene-1,1-diphosphonic acid, ethylidene-1,1-diphosphonic acid (1-hydroxyethylidene-1,1-diphosphonic acid), butylidene-1,1-diphosphonic acid, 1-hydroxyethyliderie-1,1-diphosphonic acid and 1-hydroxypropylidene-1,1-diphosphonic acid, the aminoalkane diphosphonic acid described at page7 line 20 to page 8 line 6 in JP-A 9-504342 and the phosphorus-containing compound described at page line 2 to line 8 of right lower column in JP-A 1-162865. A part or the whole of the phosphonic group may be in a salt form. Among the compounds of the above-mentioned formulae (5) and (6), additionally, the organic phosphonic acid includes amino-tri(methylene phosphonic acid), ethylenediamine-tetra(methylene phosphonic acid), diethylenetriamine-penta (methylene phosphonic acid) and triethylenetetramine-hexa (methylene phosphonic) acid. Among the compounds of the formulae (5) and (6), furthermore, aminocarboxylic acid includes nitrilotriacetic acid, ethylenediaminetetraacetic acid, diethylenetriaminepentaacetic acid and triethylenetetraminehexaacetic acid. Component (B) includes preferably the compound of the formula (4), among them being preferably ethylidene-1,1-diphosphonic acid or a salt thereof.

From the respect of the efficiency on the prevention of scum accumulation in accordance with the present invention, the weight ratio of Components (A) and (B) is (A)/(B) = 99/1 to 40/60, preferably 99/1 to 60/40 and particularly preferably 98/2 to 80/20.

If necessary, the detergency-improving composition of the present invention may be used in combination with a nonionic surfactant such as polyoxyethylene alkyl ether and polyoxyethylene alkyl aryl ether; an alkali builder such as soda ash and caustic soda; and a defoaming agent such as polyoxyalkylene ether-based, silicone oil-based and mineral oil-based agent.

The detergency-improving composition of the present invention is used to make concentration of a solid content be 0.1 to 10 g/liter, preferably 0.3 to 5 g/liter in a treatment-solution. From the respect of the efficiency on the prevention of scum accumulation, in this case, the concentration of an alkali, for example NaOH, in the treatment-solution may be made up to be 10 to 80 g/liter, preferably 20 to 70 g/liter and particularly preferably 30 to 60 g/liter.

The detergency-improving composition of the present invention can be applicable to a natural fiber such as cotton, linen and wool; a chemical fiber such as polyester, nylon. rayon and triacetate; and a blend and union fiber thereof. The refinery method may be any of an ordinary batch mode and continuous mode. However, the present detergency-improving composition is preferably used for a continuous mode, because a continuous mode is generally carried out at high alkali concentration. The refinery temperature varies depending on the fiber type, but the refinery temperature is generally 20 to 140 °C and preferably 50 to 130 °C. Further, the detergency improves because the detergency-improving composition makes scum not accumulate on a deterging machine, not only when the detergency-improving composition is used for fiber-refinery process but also when the detergency-improving composition is used for a deterging system at high alkali concentration such as deterging metals and deterging glasses.

### Examples

### 〈Device for test〉

A device for test comprising a saturator, a squeeze roller (mangle) (newmatic mangle provided by Tsujii Dye Machine Industries, Co. Ltd.) and a steamer box was used.

### 〈Test method〉

A treatment-solution is prepared, comprising 1 g/liter of detergency-improving composition (in solid content) as use of the following blended components at the composite in Table 1, 50 g/liter artificial hard water having 192 °DH, 40 g/liter or 60 g/liter of NaOH. 1 liter of the artificial hard water having 192 °DH is obtained by dissolving 3.04 g of CaCl₂ and 1.39 g of MgCl₂·6H₂O into deionized water and making up to be 1 liter accurately using a measuring tool such as a messcylinder, messflask and mess-pipet.

A cotton cambric texture, which had zonal shape, which was unrefined and which had its band of 15cm-wide, was immersed in the treatment-solution at 25 °C for 5 seconds. And then, the cotton cambric texture was squeezed with the mangle to control the adhered amount of the treatment-solution as 100 % owf (on the weight of fabric). Further, the cotton cambric texture was heated and treated in the steamer box (at 95 °C). The treatment was continuously carried out at a fabric-rate of 5 m/mm for 1 hour.

### 〈Blended components〉

- Polymer 1: a copolymer of 20 mol % of an allyl alcohol EO adduct (average number of EO moleculars added being 5) and 80 mol % of maleic acid 1Na salt [mol % is represented at the time of initial charging (,the same is true hereinafter)], having a weight average molecular weight of 20,000.
- Polymer 2: a copolymer of 30 mol % of an allyl alcohol EO adduct (average number of EO moleculars added being 5) and 70 mol % of maleic acid 1Na salt, having a weight average molecular weight of 20,000.
- Polymer 3: a copolymer of 20 mol % of an EO (average number of moleculars added being 10) ·PO (average number of moleculars added being 1) block adduct with an allyl alcohol and 80 mol % of maleic acid 1Na salt, having a weight average molecular weight of 15,000.
- Polymer 4: a copolymer of 30 mol % of an allyl alcohol EO adduct (average number of EO moleculars added being 16), 60 mol % of maleic acid 1Na salt and 10 mol % of styrene; having a weight average molecular weight of 10,000.
- Polymer 5: a copolymer of 30 mol % of the monomethyl ether of an allyl alcohol EO adduct (average number of EO moleculars added being 6), 50 mol % of maleic acid 1Na salt and 20 mol % of acrylic acid; having a weight average molecular weight of 30,000.
- PAHA: poly-α-hydroxyacrylic acid (Pale Black 250; provided by Nippon Peroxide, Co., Ltd.).
- Phosphonic acid: ethylidene-1,1-diphosphonic acid.
- Phosphonic acid 4Na: ethylidene-1,1-diphosphonic acid 4Na salt.
- NTA: nitrilotriacetic acid.
- NTA 3Na: nitrilotriacetic acid 3Na salt.
- EDTA: ethylenediaminetetraacetic acid.
- EDTA 4Na: ethylenediaminetetraacetic acid 4Na salt.
- DTPA: diethylenetriaminepentaacetic acid.
- DTPA 5Na: diethylenetriaminepentaacetic acid 5Na salt.

Incidentally, the weight average molecular weights described above were measured by aqueous gel permeation chromatography with the column: G4000PWXL and G2500PWXL columns (all provided by Tosoh Corp.) and with the eluent: phosphoric acid-based buffer [0.2 mol/liter. Na₂HPO₄/KH₂PO₄, (pH 7.0)]/CH₃CN = 9/1 (in volume ratio), at 40 °C, using a differential refractometer and the standard material: polyethylene oxide.

### 〈Evaluation of detergency〉

After the treatment, the scum of the roller in the steamer box was evaluated by eyes on the basis of the following criteria:
1. no scum observed,
2. slight scum adhered,
3. some scum adhered on the roller,
4. scum adhered on fairly large area and
5. fairly large amount of scum adhered on the whole roller.

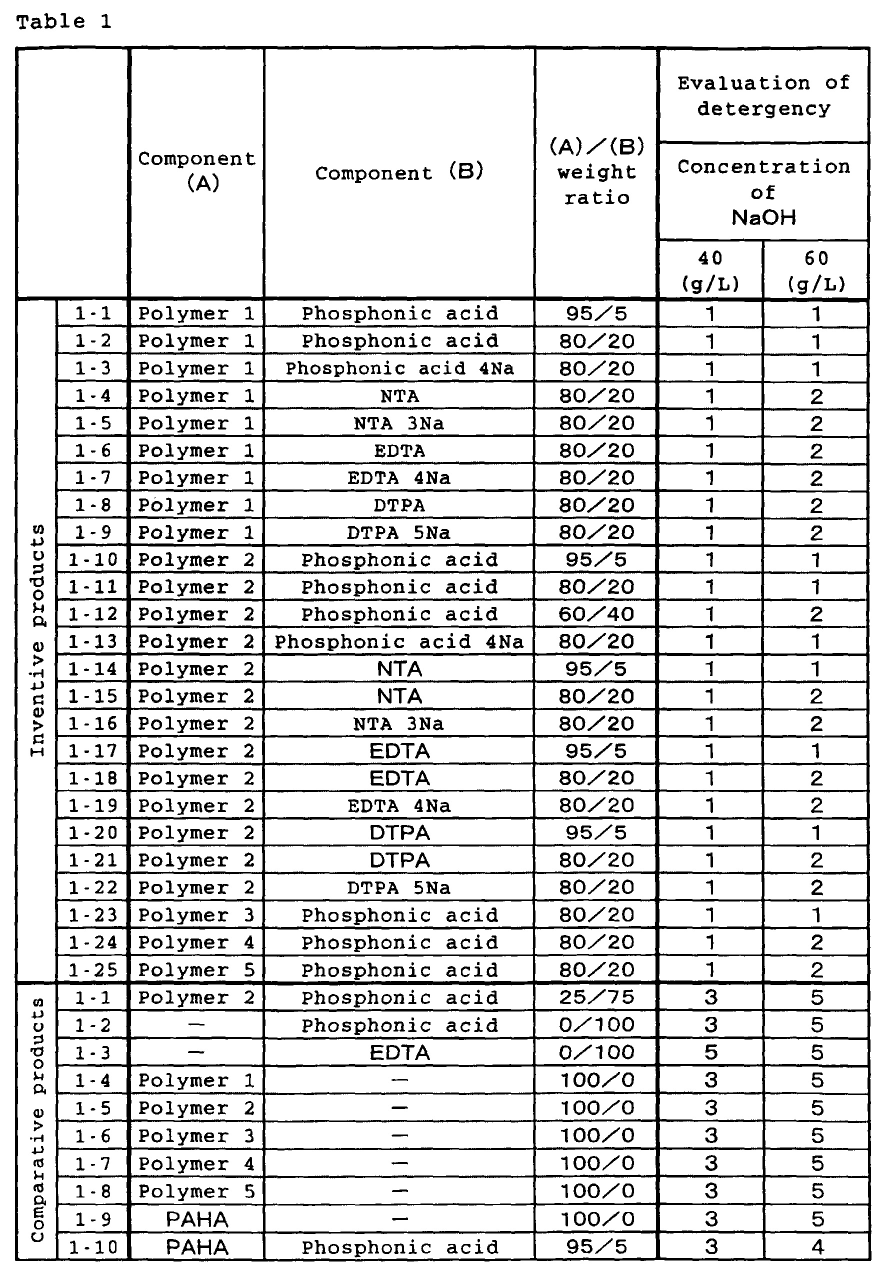

### 〈Evaluation of dispersibility〉

Using the detergency-improving compositions in Table 2, the dye solutions of the following composites are prepared. The components in Table 2 are the same as those in Table 1.

### (Dye solution)

| | |
|---|---|
| Detergency-improving composition content, | 0.5 g/liter in solid |
| CI Reactive Blue 19 | 2.0 g/liter, |
| CI Reactive Yellow 15 | 0.3 g/liter, |
| Glauber's salt | 50.0 g/liter and |
| sodium carbonate | 20.0 g/liter. |

The above-mentioned dye solution was mixed at 40 °C for 1 minute. Filter No. 5 provided by ADVANTEC CO. was inserted between two glass plates (,upper glass plate having a pore of a 5mm diameter at its center); 1 ml of the above-mentioned dye solution was injected into the pore at the center of the upper glass plate; and then, the dye dispersibility was evaluated by eyes on the basis of the following criteria. The more uniformly the system of dye solution was dispersed (having no aggregation of the dye), the more uniformly the dye solution spread in a circle shape form the center of filter. The results are shown in Table 2.
- ○ :: uniform spreading of dye solution in a circle shape,
- △:: slightly uneven spreading of dye solution and
- X:: uneven spreading of dye solution having largely unevenness.

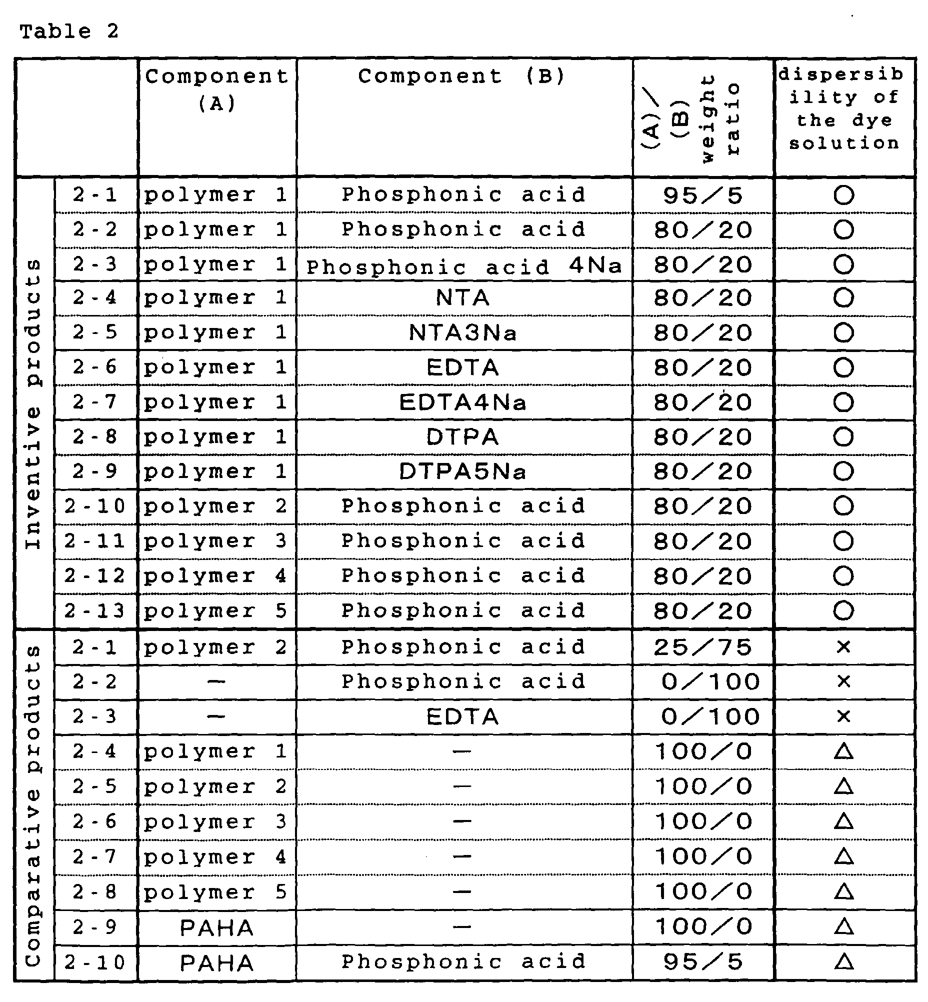

## Claims

1. A detergency-improving composition comprising copolymer (A) prepared by polymerizing the following monomers (1) and (2) or the following monomers (1), (2) and (3) and at least one compound (B) selected from the compounds represented by the following formulae (4), (5) and (6), at a ratio (A)/(B) by weight of 99/1 to 40/60;
• monomer (1): represented by the following formula (1): 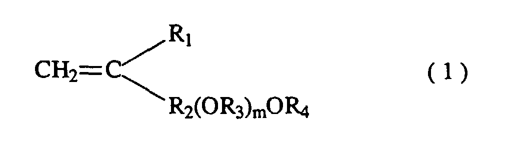
wherein
R₁: hydrogen atom or methyl group,
R₂: -(CH₂)-, -(CH₂)₂- or -C(CH₃)₂-,
R₃: an alkylene group having 2 to 4 carbon atoms,
R₄: hydrogen atom or an alkyl group having 1 to 4 carbon atoms, and
m: a number selected from 1 to 100;
• monomer (2): represented by the following formula (2): 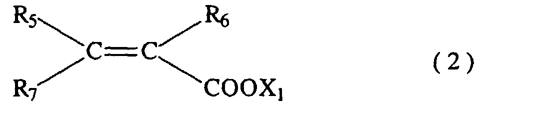
wherein
R₅, R₆: hydrogen atom or methyl group,
R₇: hydrogen atom, methyl group or -COOX₂, and
X₁, X₂: representing independent from the others, hydrogen atom, a monovalent metal atom, a divalent metal atom, ammonium group or an organic amine group;
• monomer (3): having an unsaturated bond which is copolymerizable with the monomers (1) and (2): 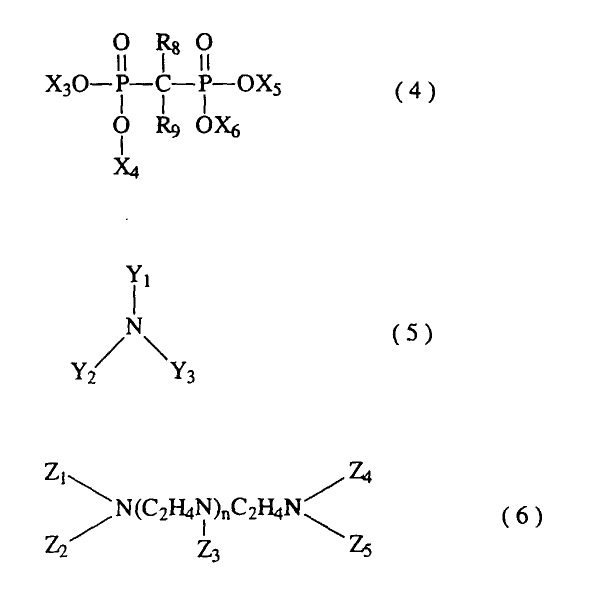
wherein
R₈: hydrogen atom or an alkyl group having 1 to 10 carbon atoms,
R₉: hydrogen atom, hydroxy group, an alkyl group having 1 to 4 carbon atoms, an alkyl group having a hydroxy group and 1 to 4 carbon atoms, or -N(R₁₀) (R₁₁) wherein R₁₀ and R₁₁ independently represent hydrogen atom, an alkyl group having 1 to 22 carbon atoms, a cycloalkyl group having 5 to 6 carbon atoms, a phenyl group, an alkylphenyl group having a C 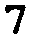 ₋ 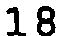 alkyl group, a phenylalkyl group having 7 to 18 carbon atoms or an alkanol group having 1 to 10 carbon atoms,
X₃, X₄, X₅, X₆: representing independent from the others, a hydrogen atom, a monovalent metal atom, a divalent metal atom, ammonium group or an organic amine group,
Y₁, Y₂, Y₃: representing independently from other groups, a hydrogen atom, -CH₂COOX₇ group or a group represented by the following chemical formula: 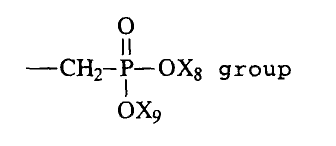
Z₁, Z₂, Z₃, Z₄, Z₅: representing independent from the others, hydrogen atom, -CH₂COOX₁₀ group or a group represented by the following chemical formula: 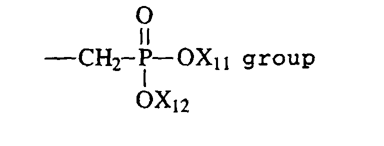
X₇, X₈, X₉, X₁₀, X₁₁, X₁₂; representing independent from the others, a hydrogen atom, a monovalent metal atom, a divalent metal atom, ammonium group or an organic amine group; and
n: an integer of 0 to 4.

2. The detergency-improving composition as claimed in Claim 1, wherein the molar ratio of the monomer (1)/the monomer (2) is 10/90 to 40/60.

3. The detergency-improving composition as claimed in Claim 1 or 2, wherein the weight ratio of (A)/(B) is 98/2 to 80/20.

4. A detergency-improving composition as claimed in any one of Claims 1 to 3, wherein Compound (B) is the compound represented by the above-mentioned formula (4).

5. A use, for improving detergency, of added detergency-improving composition as defined in Claim 1 at fiber-refinery.

6. A use, for improving dyeability, of added detergency-improving composition as defined in Claim 1 at fiber-refinery.

7. A use, for improving the detergency, of added detergency-improving composition as defined in Claim 1 at deterging object in the presence of a high concentration of an alkali.

8. A use, for preventing accumulation of scum on a refinery-treating machine, of used detergency-improving composition as defined in Claim 1 at carrying out fiber-refinery.

9. A use, for uniformly dispersing a dye, of used detergency-improving composition as defined in Claim 1.
